# EUROPEAN PATENT APPLICATION

(11) **EP 2 865 657 A1**
(43) Date of publication of application: **29.04.2015**
(21) Application number: 12879448.4
(22) Date of filing: 20.06.2012
(51) Int. Cl.: C04B 35/48, C04B 35/50, C04B 35/505, G02B 6/38

(54) **CERAMIC FERRULE**

(71) Applicant: Chaozhou Three-Circle (Group) Co., Ltd., Chaozhou, Guangdong 515646 (CN); Nanchong Three-Circle Electronics Co., Ltd., Nanchongn, Sichuan 637100 (CN)
(72) Inventor: ZHENG, Zhenhong, Chaozhou Guangdong 515600 (CN); WANG, Zhanhui, Chaozhou Guangdong 515600 (CN)
(74) Representative: Von Kreisler Selting Werner - Partnerschaft von Patentanwälten und Rechtsanwälten mbB
(86) International application number: PCT/CN2012/077271
(87) International publication number: WO 2013/189053

(57) **Abstract**

The present invention relates to a ceramic material preparation technology. The present invention also relates to optical communication technology, especially to a ceramic ferrule made of a complex Zircornium oxide base material which blends with a rare element, such as Yuttrium, Cerium, etc. The ceramic ferrule made of a complex Zircornium oxide base material which blends with a rare element, such as Yuttrium, Cerium, etc. provides significant features, such as increasing the phase transition resistivity of the Zircornium oxide material, having a precise construction, effectively enhancing reliability of products and having high quality connection, good aging resistance and good environment adaptability. A movable connector of field-assembled optical fiber which adapts the present ceramic ferrule not only achieves co-axial joint of the optical fibers better surface smoothness as compared with plastic ceramic ferrule, but also overcomes the problem of scratching easily incurred during connection between plastic materials. The present invention has characters of good aging resistance, low insertion lose on jointing of optical fibers, high return loss and good connection quality.

## Description

### FIELD OF THE INVENTION

The present invention is related to the field of ceramic material production and optical communication, more particularly, it is related to a ceramic ferrule made of Zircornium oxide mixed with rare earth elements such as yttrium and/or cerium.

### BACKGROUND OF THE INVENTION

In recent years, along with the development of optical communication industry and national policy, great improvement has been made in FTTH. There are many solutions for "Last kilometer access", including the movable connector assembled on site for pre-embedded optical fiber, the movable connector assembled on site for straight connection and the hot melt type connector. The movable connector assembled on site for pre-embedded optical fiber accounts for a larger percentage in "Last kilometer access" due to its simple operation and quick assembly, and meanwhile, it has no special requirements for environment and no power supply is required. It can be operated with simple tools and easily carried.

The connecting point for most of the movable connector assembled on site for pre-embedded optical fiber is in the plastic V-shaped groove. But the plastic is likely to age and deform after long-term service or change property in bad environment, therefore, connection loss or connection failure possibility is higher. In addition, the precision of the plastic V-shaped groove cannot meet the connection requirements in micron level. The failure rate for these products is high after 1 to 2 years.

In order to overcome the above disadvantages, the connecting point of the optical fiber is disposed in the inner bore of the ceramic ferrule in the prior art. The coaxial connection is achieved by the high precision inner bore of the ceramic ferrule. Generally, the ceramic ferrule is made of Zircornium oxide mixed with single yttrium, which will be transformed structurally, i.e., from tetragonal phase to monoclinic phase, after used for a period of time. With this kind of structural changes, the crystalline grain becomes thicker and larger. The surface smoothness will become poor. Therefore, the optical fiber cannot be connected smoothly in the inner bore, or it is prone to become connection exhausted or connection failure, due to the lateral offset of the connecting optical fiber.

### SUMMARY OF THE INVENTION

In view of the above-mentioned problems, a ceramic ferrule made of Zircornium oxide (zirconium dioxide) mixed with rare earth elements such as yttrium and/or cerium, is provided in the present invention, in order to strengthen the phase change resistance of the Zircornium oxide, to improve the reliability of the product.

To achieve the above objective, solutions are adopted in the present invention as follows:
A ceramic ferrule made of Zircornium oxide mixed with one or more rare earth elements selected form the group of lanthanide series elements, yttrium and scandium. The lanthanide series elements are selected from lanthanum, cerium, praseodymium, neodymium, promethium, samarium, europium, gadolinium, terbium, dysprosium, holmium, erbium, thulium, ytterbium and/or lutetium.

Preferably, the rare earth elements are selected from yttrium and cerium, i.e. the material of the ceramic ferrule is made of Zircornium oxide mixed with yttrium and cerium.

Preferably, material composition, that is Zircornium oxide mixed with yttrium and cerium, is (Ce_{1-x-y}Y_{y}Zrₓ) O₂ + m (wt%) Al₂O₃, wherein x=0.30~0.97mol, y=0.05~0.80mol, m=0~10wt%.

Preferably, the amount of Al₂O₃ added into the composition, is based on the total mass of the Zircornium oxide mixed with yttrium and cerium.

Preferably, in the material of Zircornium oxide mixed with yttrium and cerium, the added aluminum element may also include other aluminium salt besides Al₂O₃.

Advantages of the utility model invention are summarized below compared with the prior art:
The ceramic ferrule, made of Zircornium oxide mixed with rare earth elements such as yttrium and cerium, enhances the phase change resistance of the Zircornium oxide material. Therefore the structure precision and product reliability is improved, and thus the splicing quality, anti-aging performance and environmental adaptability of the material are improved.

A Field-Mountable Optical Fiber Connector is used in the present invention, and the connecting point is set in the high precision inner bore of the ceramic ferrule of the connector. The coaxial connection of the optical fiber is thus achieved, and the surface finish is improved compared with materials that are made of plastic. In addition, scraping problems which is obvious in product made of plastic, when connected, is overcome in the present invention. Environmental adaptability of the material and anti-aging performance are improved. After optical fibers are connected, the insertion loss is lowed, the return loss is higher, and the splicing quality is enhanced.

### BRIEF DESCRIPTION OF THE DRAWINGS

FIG. **1** is a SEM picture of the ferrule of the Field-Mountable Optical Fiber Connector, made of Zircornium oxide mixed with rare earth such as yttrium and cerium, before aging treatment;
FIG. **2** is a SEM picture of the ferrule of the Field-Mountable Optical Fiber Connector made of Zircornium oxide mixed with rare earth such as yttrium and cerium, after aging treatment;
FIG. **3** is a SEM picture of the ferrule of the Field-Mountable Optical Fiber Connector made of Zircornium oxide mixed with yttrium only, before aging treatment;
FIG. **4** is a SEM picture of the ferrule of the Field-Mountable Optical Fiber Connector made of Zircornium oxide mixed yttrium only, after aging treatment; and
FIG. **5** is a schematic diagram of the optical fiber connection achieved by the Field-Mountable Optical Fiber Connector, in the inner bore of the ceramic ferrule.

### DETAILED DESCRIPTION OF THE EMBODIMENTS

The invention is described in further detail below with reference to the embodiments.

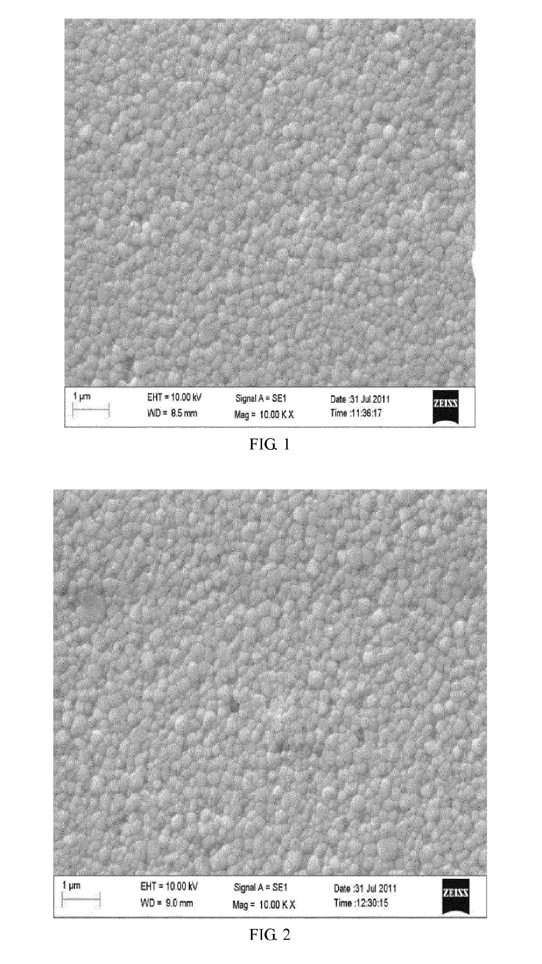

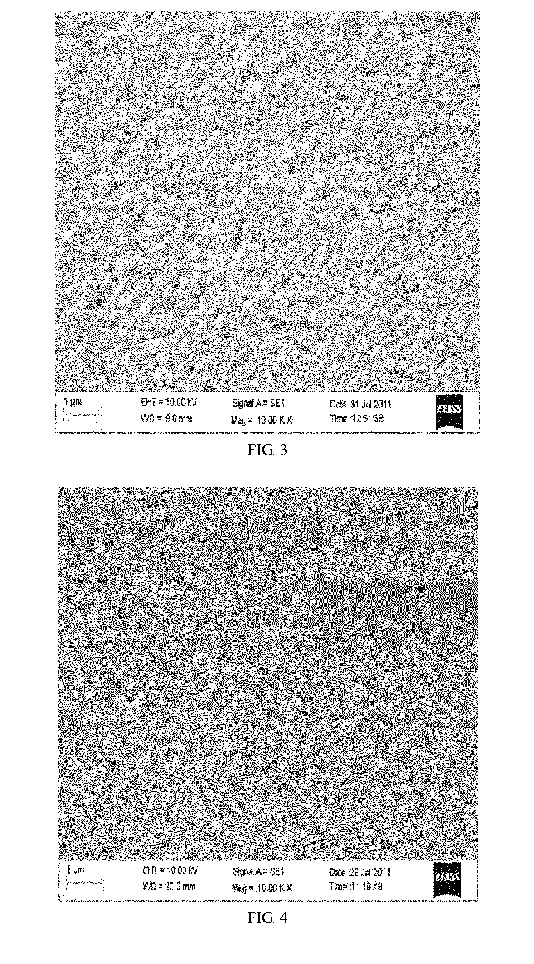

As shown in FIGS. **1-5****,** a ceramic ferrule made of Zircornium oxide mixed with one or more rare earth elements is provided in the present invention, wherein the rare earth elements are selected from the group of lanthanide series elements, yttrium and scandium. In this embodiment, the ceramic ferrule is Zircornium oxide mixed with yttrium and cerium, that is (Ce_{1-x-y}Y_{y}Zrₓ) O₂ + m (wt%) Al₂O₃, wherein x=0.30~0.97mol, y=0.05~0.80mol, m=0~10wt%. The amount of Al₂O₃ added is based on the total mass of the Zircornium oxide mixed with yttrium and cerium.

The Field-Mountable Optical Fiber Connector, with said ceramic ferrule comprises a ceramic ferrule **1,** which is made of Zircornium oxide mixed with one or more rare earth elements, wherein the rare earth elements are selected from the group of lanthanide series elements, yttrium and scandium. The ceramic ferrule **1** is provided with an inner bore for accommodation of pre-embedded optical fiber **2.** The inner bore is provided with an optical fiber connecting point **3.** In this embodiment, the ceramic ferrule **1** is made of Zircornium oxide mixed with yttrium and cerium.

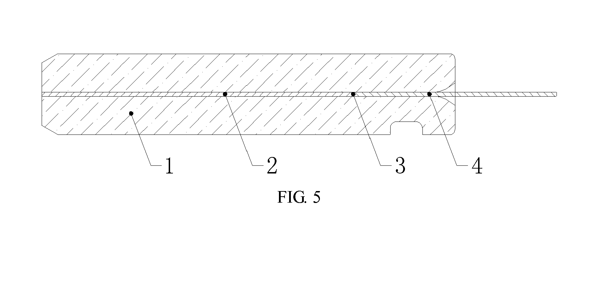

As shown in FIG. 5, No. 1 represents for the ceramic ferrule, 2 represents for the pre-embedded optical fiber, 3 represents for the connecting point of the optical fiber, and 4 represents for the connecting fiber.

As shown clearly in FIGS. **1-4****,** before aging treatment, both the ferrule of the Field-Mountable Optical Fiber Connector made of Zircornium oxide mixed with yttrium and cerium, and the ferrule of the Field-Mountable Optical Fiber Connector made of Zircornium oxide mixed with yttrium, have compact microstructures with fine crystalline grain of uniform size. However, after aging treatment, the microstructure of the ferrule made of Zircornium oxide mixed with yttrium, have changed structurally, obviously, More specifically, the size of the crystalline grain become bigger, and even fissure is found in crystalline grain. While, the microstructure of the ferrule made of Zircornium oxide mixed with yttrium and cerium maintains basically the same as that before aging treatment.

## Claims

1. A ceramic ferrule, **characterized in that** material of the ceramic ferrule is Zircornium oxide mixed with one or more rare earth elements selected from the group of lanthanide series elements, yttrium and scandium.

2. The ceramic ferrule according to claim 1, **characterized in that** the material of the ceramic ferrule is Zircornium oxide mixed with yttrium and cerium.

3. The ceramic ferrule according to claim 2, **characterized in that** the material composition of Zircornium oxide mixed with yttrium and cerium is (Ce_{1-x-y}Y_{y}Zrₓ) O₂ + m (wt%) Al₂O₃, wherein x=0.30~0.97mol, y=0.05~0.80mol, m=0~10wt%.

4. The ceramic ferrule according to claim 3, **characterized in that** the amount of Al₂O₃ is based on the total mass of the Zircornium oxide mixed with yttrium and cerium.

5. The ceramic ferrule according to claim 2, **characterized in that**, in the material of Zircornium oxide mixed with yttrium and cerium, the aluminum element includes other aluminium salt besides Al₂O₃,
